# EUROPEAN PATENT APPLICATION

(11) **EP 3 279 841 A1**
(43) Date of publication of application: **07.02.2018**
(21) Application number: 16020292.5
(22) Date of filing: 31.07.2016
(51) Int. Cl.: G06Q 10/08, G06Q 10/10

(54) **PROCEDURE FOR TRANSPORT COMPANIES WITH SALARIED DRIVERS TRAVELLING TEMPORARILY TO OTHER EU COUNTRIES ON TRIPS OR TEMPORARY STAYS TO PERFORM TRANSPORT SERVICES IN SUCH OTHER COUNTRIES, WHICH HAVE TO GIVE EVIDENCE IN THESE OTHER COUNTRIES THAT AT LEAST THE MINIMUM WORKING CONDITIONS REQUIRED BY THE REGULATIONS OF THESE OTHER COUNTRIES APPLY TO THE DRIVER DURING HIS STAY**

(71) Applicant: Vinas Peya, Juan, 28046 Madrid (Madrid) (ES)
(72) Inventor: Vinas Peya, Juan, 28046 Madrid (Madrid) (ES)

(57) **Abstract**

It's a procedure for transport companies of persons and/or goods by road, with salaried drivers travelling temporarily to other EU Countries, other than their usual Country, on trips or temporary stays, to perform transport services in such Countries, which have to prove in these other Countries that at least the minimum working conditions required by the regulations of these Countries apply to the driver during his stay.

The procedure requires that for each evidentiary document its validity period must be registered, with dates of start and end, as well as the Country which it's intended to, linked to the Company if it's common or to the driver if it's specific for him, and the dates of start and end of each driver's stay in these other Countries. A web server determines whether the uploaded documents give evidentiary coverage to the stays.

## Description

Procedure for transport companies of persons and/or goods by road, with salaried drivers travelling temporarily to other Countries of the European Union (EU), other than their usual Country, on trips or temporary stays, to perform transport services in such other Countries, which have to give evidence in these other Countries that at least the minimum working conditions required by the regulations of these other Countries apply to the driver during his stay.

### FIELD OF THE INVENTION

This invention is an innovative procedure to be implemented on a web server; the object of which is to reduce human and material resources to be used and the number of necessary communications, for the management of different types of documents which are or will be required to companies of transport by road in each of the EU Countries in order to provide evidence that the employment conditions applied to the driver temporarily travelling or assigned to another EU Country different from his usual one for performing transport services, are at least the minimum employment conditions authorised in such other Country during his stay therein.

### BACKGROUN OF ART

The invention is novel because it gives satisfactory solution to a necessity that came into being recently, and there is no prior solution or history of it. Indeed, within the EU Countries there is freedom to provide services in any of them for companies established in other State member of the EU; however, it is required that to the workers assigned to a Country, other than their usual one where they have their workplace, at least the minimum employment and social conditions established in these other Country are applied to them during their stay therein.

The measures of Directive 2014/67/EU, of 15 May, are been incorporated (transposed) as law in France, becoming in force since 01/07/2016, and they have to be also applied in all other EU Countries. French Law requires that, about salaried drivers temporarily travelling from a Country where they have their usual workplace to another EU Country to perform road transport services, that this other Country should check and verify that the minimum employment conditions of its internal regulations apply to these drivers during their stay in it.

The companies concerned are obliged to designate a representative in that other EU Country and to make available to him, for each trip or stay by the driver, the evidentiary documents that such other Country may specify about the employment conditions applied to the driver during his stay in that other Country.

Drivers of a company and their movements can be a lot, at different times and to different Countries, and the evidentiary documents so required for giving evidence of the applied working conditions are also numerous, some of them being specific in each Country, and they also have limited periods of validity that may be different each other.

### SUMMARY OF THE INVENTION

If it is used the traditional management procedure for delivery, by email to each representative in each relevant Country, of the evidentiary documents for each driver, each trip or stay in other Country, taking into account the limited period of validity of each of the different types of documents, human and material resources devoted to such task and number of necessary communications are quite considerable.

The invention has created a procedure that must be implemented on a web server connected to the Internet that, for each driver and travel to other Country different to his usual one, analyzes and decides whether already uploaded documents of evidence to server, required in this other Country, based on their term of validity and the period of stay of the driver in this other Country, give evidentiary coverage to such stay or, on the contrary, some documents are missing or shall be updated. Valid documents are automatically linked to the registered driver stay and missed ones are required to be uploaded. Thus, required human, material and communication resources to perform the task are effectively reduced.

### DETAILED DESCRIPTION OF THE INVENTION

Transport companies which temporarily move drivers to other EU Countries, other than their usual one, must provide their representative in these other Countries evidentiary documents that each driver during their stay in these other countries, have been applied at least the legal minimum working conditions required in each of these other countries.

These evidentiary documents have different validity periods, for example, a monthly driver's pay slip and its payment justification that can prove the gross salary per hour satisfied, is valid as proof only for the period covered by it.

Some of these evidentiary documents are the same for all EU Countries, and others are specific to each Country, for example, in each Country has its own forms, which are different and with different periods of validity.

The direct and immediate way to comply with document requirements, as it is now being done by companies, is to create a file, for each trip or stay of a driver in another EU Country other than his usual one, that includes copies of all valid evidentiary documents required by this other Country. This file that provides coverage for the driver's period of stay in that other Country, is sent by email to the relevant representative in this other Country.

On the contrary, the invention provides that each piece of evidentiary document should be uploaded on a server through its website which according to the type is associated, either to the Company, if it's a common document for all Company drivers, for example, a collective labour agreement, or to each driver, if it is unique to him, for example, his pay slip. Regarding to these evidentiary documents, validity periods thereof are also registered, with start and end validity dates, or start date and validity period, and also Country or Countries in which every type of document is required.

Access to the web server shall be allowed to the representatives of the other Countries, although each one has only access to the evidentiary documentation associated with the trips or stays of drivers in the Country in which he represents the Company.

In turn, the invention requires that it should be registered in the web server separately for each driver every stay in another EU Country other than his usual one, with the respective dates of start and end of the stay, or the start date and the period of stay of the driver in this other Country.

The server, considering the validity term of each evidentiary document, the Country or Countries for which each type of document is intended, and the dates of entry and exit of the driver in each stay in other Country different from his usual one, verifies for each registered driver's stay in another Country if it has all the evidentiary documents required by the Country of stay or trip of the driver, or if any documents are missing, specifying in this latter case the types and required validity periods of any missing document.

This verification process can be made when certain events occur, such as in each addition, modification or deletion of an evidentiary document and in each addition, modification or deletion of a stay of a driver in another Country other than his usual one.

The server will display the list of truck or bus drivers with some missing evidentiary documents and, for each of these drivers, the will display the types of missing documents and, for every one of them, the missing periods to be covered in each Country.

The server will display visible links on each recording of trip or stay in another EU Country with every type of evidentiary document that provides coverage for this stay, highlighting the empty spaces of document types that are required but missed in order to be remedied. Documents linked to a recording of trip or stay of a driver can be downloaded to be shown to the relevant authorities of this other Country at the request of such authorities.

Therefore, the company at any time will be informed of what evidentiary documents are missing and for what Countries, and will not have to search evidentiary documents which are in force to replicate them from a register of trip to another one of the same driver and Country, or between registers of trip in different Countries if the same type of document may be valid in several of these Countries.

In this way, the invention enables an efficient management and reduces the human and material resources used by the company for this task and the number of deliveries, either by email or by any other alternative means, to the representatives in other Countries.

### A WAY OF CARRYING OUT THE INVENTION

The invention can be implemented on a web server connected to the Internet. The web server will have installed a database for registration of trips and documents, and storage space for digitized evidentiary documents.

Firstly, the company will register itself on the server with a user name and a password. Upon registration, each company will complete the form with its identity details. The server will identify the company only by its username and its password, or with the names and passwords requested and obtained using a valid previous one.

Several users of the same Company can simultaneously interact with the server using the name and password of the Company.

Secondly, the company will register its drivers and, for each of them, will go registering separately the successive trips to other Countries, other than his usual one where his workplace is located, specifying for each trip or stay the date of arrival and departure in that other Country.

The company will upload the evidentiary documents in the forms required in each Country, so that those that are common to all drivers will be associated directly to the company and those that are specific to a driver will be associated with him (payslips, proof of payment of wages, travelling certificates, ...)

For each type of evidentiary document, the Country or Countries for which it is issued will be registered, together with the validity period thereof by the dates of start and end of that period, or start and period of effectiveness.

The server, considering the period of validity of the evidentiary documents, the Country or Countries for which such documents are issued, the stay dates and the Country of each trip by the driver, will verify which trips of the driver have full period coverage with the evidentiary documents and which of such trips lack coverage either wholly or partially regarding the period of stay in the other Country.

This verification process will be triggered by events, which are each addition, modification or deletion of any evidentiary document and each addition, modification or deletion of the recording of trip for a driver to other Country different to his usual one.

The server displays to the Company the list of drivers missing any evidentiary documents and, for each of them, the types of missing documents and, for every one of them, the missing periods to be covered in each Country.

The server will display visible links on each recording of trip or stay in another EU Country with every type of evidentiary document that provides coverage for this stay, highlighting the empty spaces of document types that are required but missed, in order to be remedied.

Documents related to the recording of a driver's trip can be downloaded for them to be shown to the relevant authorities of that other Country at the request of them.

The evidentiary documents on the server will only be available to the Company that had uploaded them and to the representative of the relevant Country.

The server will not reject any data of the company because those same data, in whole or in part, had been registered previously. Only a record of a Company intending to use a name and password which is already registered and in force will be rejected.

### THE INVENTION IS SUSCEPTIBLE OF INDUSTRIAL APPLICATION

The invention is liable for industrial application, because, when implemented on a server, it can provide services through the Internet to multiple transport Companies in order to make them more efficient in the management of such evidentiary documents.

## Claims

1. Procedure for Companies of transport of persons and/or goods by road, which temporarily send salaried drivers to other EU Countries, other than their usual one where they have their workplace, on trips or temporary stays, in order to perform transport services in these other Countries and that, as a result of it, for each temporary stay of a driver in other Country they should make available to the relevant authorities of this other Country typified evidentiary documents, which may differ according to the Country, giving evidence that the Company applies to the driver during his stay in this other Country at least the minimum employment conditions required by the regulations of this other Country. This procedure, which comprises a web server (computer) connected to the Internet, with a database and file storage capacity, is **characterized by** the following:
• On the server, for each Company, it must be registered separately each temporary trip or stay of a driver in another Country, other than his usual one, for performing transport services in this other Country, recording the dates of start and end of the stay, or the date of start and the duration of the driver's stay in this other Country, hereinafter called register of a driver's stay.
• Each evidentiary document must be uploaded to the server and be associated, according to the type of document, either to the Company as entity, if it is a documents common for all drivers, or to each driver, if it is a specific document of him.
• For each evidentiary document, it must be registered its validity period with the date of start and end, or of start and validity period and, based on each type of document, the Country or Countries to which it is intended.
• The server, taking into account the term of effectiveness of each evidentiary document, the Country or Countries to which each type of documents is intended, and the dates of entry and departure of the driver in each Country, will verify whether each register of a driver's stay has either all required evidentiary documents or none, or only some of them, making distinction, should it be the case, on the types of document which are missing and if the lack thereof is for the whole period of stay or only for part of it, showing the results in different views. This process of verification may optionally be performed at the occurrence of events such as, among others, the addition, modification or deletion of an evidentiary document, and the addition, modification or deletion of the register of a driver's stay in another Country.
• The server will show a visible link with each type of evidentiary document on each register of a driver's stay which provides coverage to this stay, highlighting on the register of a driver's stay the spaces for the types of documents which have no linked documents. The linked documents to a register of a driver's stay can be downloaded in order make them available to the relevant authorities of the other Country at their request.

2. Procedure according to claim 1 characterized because the evidentiary documents at the server will only be available to the one who had uploaded them, who will be only identified by its name and password and no with other details, and to the representative of the relevant Country.
